Europäisches Patentamt

**European Patent Office**

**Office européen des brevets**

(11) Publication number: **0 094 236**
A1

# EUROPEAN PATENT APPLICATION

(21) Application number: **83302606.5**

(51) Int. Cl.³: **G 02 B 5/14, C 03 C 13/00**

(22) Date of filing: **09.05.83**

(30) Priority: **10.05.82 US 376863**

(43) Date of publication of application: **16.11.83**
**Bulletin 83/46**

(84) Designated Contracting States: **AT BE CH DE FR IT LI NL SE**

(71) Applicant: **RAYCHEM CORPORATION, 300 Constitution Drive, Menlo Park California 94025 (US)**

(72) Inventor: **Arrington, John Preston, 1360 Oakhurst Avenue, San Carlos California 94070 (US)**

(74) Representative: **Jay, Anthony William et al, Raychem Limited Patent Department Faraday Road, Dorcan Swindon Wiltshire SN3 5HH (GB)**

(54) **Method of transmitting uv light.**

(57) A method of transmitting light which has a substantial component having a wavelength below 300 nm includes passing said light through an optical fiber which has a core of synthetic fused silica and a cladding of fluorine-doped synthetic fused silica. Apparatus employing such a fiber is also described.

MPO820

This invention relates to a method of transmitting light having a substantial ultraviolet (UV) component via an optical fiber.

Although conventional fiber optics systems, such as are coming into increasing use in the telecommunications industry, employ light in the visible or, more usually, in the near-IR wavelength range, it is sometimes desirable to be able to transmit UV light via an optical fiber. By UV light is meant light having a wavelength between about 150 and 400 nanometers, with that portion having a wavelength less than about 200 nanometers being referred to as the vacuum ultraviolet.

As fused silica has the lowest UV absorption of glassy materials, it is potentially an extremely suitable core material for a UV transmitting fiber, but its low index of refraction makes the finding of a suitable cladding difficult. It has therefore been a common practice to dope the silica core to raise its refractive index sufficiently to permit undoped silica to be used as the cladding, but most such fibers, having a doped fused silica core and a fused silica cladding, are not satisfactory for UV transmission since the dopants cause the fiber to absorb some components of UV light.

Organic polymer claddings, notably siloxanes (polydimethyl siloxanes) and fluorocarbons such as FEP (fluorinated ethylene-propylene) which have a lower refractive index than fused silica, have been used for silica cored fibers, and such fibers (generically referred to as PCS fibers) will transmit UV light.

However they suffer from several disadvantages: (1) because the core-cladding compatibility at the interface is not as good as that in an all-silica fiber, scattering is more severe and this decreases transmission, especially at the shorter vacuum ultra-violet wavelengths, (2) siloxanes absorb substantially below 210 nm, and (3) the presence of a polymer cladding renders the fiber less suitable for operation at high temperatures or in other harsh environments.

Satisfactory transmission in the vacuum UV has thus not been obtainable with the aforementioned commercial fibers. The present invention makes possible improved transmission in the vacuum UV range.

The invention provides a method of transmitting light of which the ratio of the intensity in the wavelength range from 150 to 300 nanometers to the intensity in the wavelength range from 150 to 400 nanometers is at least 10%, which comprises directing said light onto one part, preferably one end, of an optical fiber and receiving the light transmitted through said fiber on emission thereof from another part, preferably the other end, of said fiber, wherein said fiber comprises a core consisting substantially only of synthetic fused silica and a cladding consisting substantially only of fluorine-doped synthetic fused silica. The invention also provides apparatus comprising:

(a) an optical fiber, which fiber comprises a core consisting substantially only of synthetic fused silica and a cladding consisting substantially only of fluorine-doped synthetic fused silica; and

(b) light-responsive means adjacent a part of the fiber from which light transmitted thereby in use can be emitted from the fiber, preferably adjacent one end of said fiber, the light-responsive means being responsive to light on at least one wavelength less than 300, preferably less than 280 nanometers and being arranged to receive such light when emitted from the fiber.

It has surprisingly been found that the dopants present in fluorine-doped fused silica cladding do not cause increased UV absorption and that in consequence the specified optical fibers comprising a core consisting substantially only of synthetic fused silica and a cladding consisting substantially only of fluorine-doped synthetic fused silica are capable of UV transmission to below 200 nanometers.

Such fibers were previously known for their radiation hardness, that is their ability to resist interference from external radiation while transmitting ordinary wavelengths, and methods for their manufacture are disclosed in, inter alia, U.S. Patents Nos. 4,082,420; 4,161,505; 4,162,908; 4,165,152; 4,165,915; 4,221,825; 4,242,375; and 4,295,869. Preforms for such fibers are generally produced by the combustion of a silicon compound in oxygen to produce synthetic fused silica, and the dopant for the cladding is introduced by the addition to the combustion mixture of a source of the dopant, eg. $CCl_2F_2$. Combustion of the dopant sources in the oxygen produces the dopant material, and by fluorine-doped synthetic fused silica is meant a synthetic fused silica into which has been introduced fluorine or a chemical compound thereof.

The expression "light having a substantial UV component will be understood to mean light of which the ratio of the intensity in the wavelength range from 150 to 300 nanometers, preferably 150 to 280 nanometers, to the intensity in the wavelength range from 150 to 400 nanometers, or of which the ratio of the intensity in the wavelength range from 150 to 200 nanometers to the intensity in the wavelength range from 150 to 250 nanometers, is at least 10%, preferably at least 50%, more preferably at least 90%.

The present invention makes use of the advantageous compatibility between core and cladding in the specified fibers, the materials having physical properties (especially coefficients of expansion) which are closely similar, and forming an intimate bond to minimize light scattering at the core-cladding interface. Since a high concentration of dopant in the cladding may alter the coefficient of expansion from that of silica, the dopant concentration should be as high as possible consistent with compatibility between the silica core and the fluorine-doped silica cladding and bearing in mind the difficulty of incorporating a high fluorine content. This generally results in a fluorine content of approximately 4 to 5 mole percent in the fluorine-doped silica.

Preferably, the cladding material should be light-transmissive, i.e. its UV cutoff (the point at which it is essentially non-transmissive) should be at a sufficiently short wavelength. In general, dopants that interact chemically with the host lattice, e.g. alkali and alkaline earth metals and metal oxides, tend to broaden the UV absorption tail of the host, thus increasing the refractive index at short wavelengths, thereby making such materials unsuitable for UV trans-

0094236

mission.   It is accordingly preferred that the synthetic fused silica core should contain substantially no elements other than silicon and oxygen and the fluorine -doped synthetic fused silica cladding should contain substantially no elements other than silicon, oxygen, and fluorine.

Step-index preforms having a fused silica core and a fluorine-doped fused silica cladding are commercially available , e.g. from Heraeus-Amersil Inc. under the trade designation Fluosil.  These have an O.D. to core ratio of 1.2 or 1.4.  It has been found that fibers suitable for the present invention, having a core diameter of from 50 to 400 micrometers, may be drawn from such preforms using conventional fiber-drawing techniques and may be coated with conventional buffer or jacket layers such as RTV silicone or polyimide.

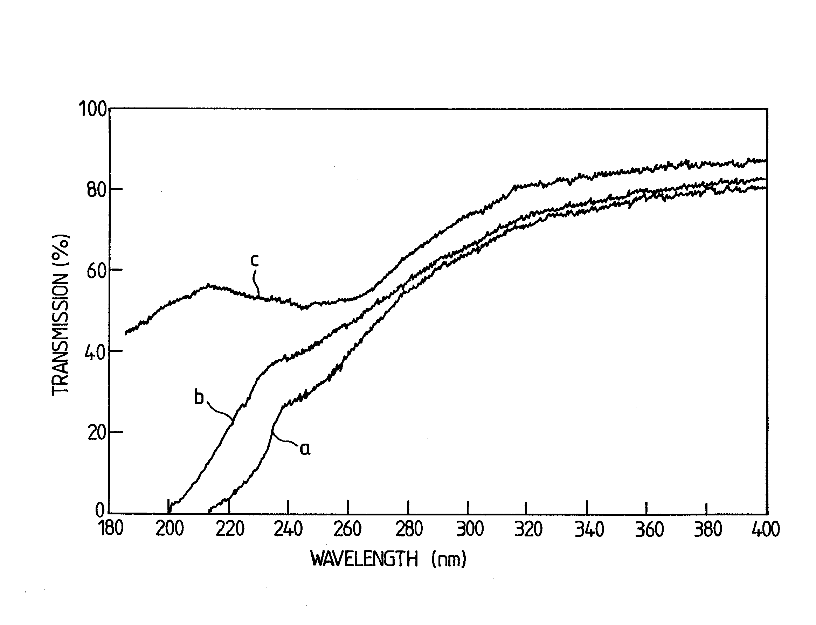

The accompanying drawing shows the relative transmission of 1 meter lengths of fibers each having a fused silica core and having claddings of (a) siloxane, (b) FEP, and (c) fluorine-doped fused silica.  It is apparent from the Figure that the siloxane clad fiber is unusable below about 210 nanometers, and the FEP-clad fiber below about 200 nm, while the fiber clad with fluorine-doped fused silica still has a transmission exceeding 50% at 200 nm.

Even in wavelengths where siloxane- or FEP-clad fibers exhibit some transmission (such as 200-250 nm), it is evidentthat the fluorine-doped silica fiber has a much higher transmission, and this enables the use of a much longer fiber for a given amount of light to pass through the fiber, enabling the use of such a fiber in situations where siloxane- or FEP-clad fiber would not be satisfactory.

The method and apparatus of this invention may be applied to, for example, the detection and quantitation by spectroscopy of materials having spectral lines in the short wavelength UV, "solar-blind" detectors, i.e. detectors for optical sources e.g. sparks or flames, which are insensitive to solar radiation (which has a short wave-length cutoff at about 280 nanometers), and in luminescence thermometers (such as the type described in U.S. Patents No. 4,075,493 and 4,215,275).

Depending on the specific end use of the present invention, it will be preferable to provide light-responsive means adjacent one end of the fiber which is responsive to light at at least one wavelength less than 300 nanometers, preferably less than 280 nanometers, more preferably less than 250 nanometers, and most preferably less than 200 nanometers. The light-responsive means may for example be an optical filter and/or may be capable of determining whether the intensity of light impinging on it at the specified wavelength(s) exceeds a predetermined level, and/or may be capable of determining the quantitative intensity of the impingent light. Light-responsive means responsive substantially only to light of less than the specified wavelength(s) may be preferable for some end uses.

Ultraviolet light sources which may be useful in connection with this invention include electric arcs, sparks, plasmas, and lasers.

The invention can usefully be applied to indicating the occurrence of an event producing light at the relevant wavelength(s) by positioning the specified optical fiber so that at least some of the light produced will impinge on it, with the aforementioned light-responsive means at the other end of the fiber either constituting, or being connected to, indicator means which is actuated by the transmitted light to provide an indicator signal.

Such indication can be adapted to spectroscopic analysis by providing means for exciting a sample to cause light at the relevant wavelength(s) to impinge on the optical fibre and thus be transmitted to light responsive means for analysing the transmitted light, or indicating the presence of a predetermined wavelength therein.

For remote temperature measurement, a layer of luminescent material is provided at one end of said optical fiber in optical communication therewith, said luminescent material being characterized by having a substantial response to excitation by light having a wavelength less than 300 nanometers, and by emitting, when excited, light that varies as a function of the temperature of the luminescent material; and means is provided at the other end of said optical fiber for transmitting light, of which the ratio of the intensity in the wavelength range of 150 to 300 nanometers to the intensity in the wavelength range of 150 to 400 nanometers is at least 10%, through said fiber and onto said luminescent material to cause it to emit light; and further means is provided near said other end of said optical fiber for responding to light emitted by said luminescent material to produce signal indicative of the temperature of the luminescent material.

0094236

CLAIMS:

1.      A method of transmitting light of which the ratio of the intensity in the wavelength range from 150 to 300 nanometers to the intensity in the wavelength range from 150 to 400 nanometers is at least 10%, which comprises directing said light onto one part of an optical fiber and receiving the light transmitted through said fiber on emission thereof from another part of said fiber, wherein said fiber comprises a core consisting substantially only of synthetic fused silica and a cladding consisting substanially only of fluorine-doped synthetic fused silica.

2.      The method of claim 1 wherein the ratio of the intensity in the wavelength range from about 150 to 280 nanometers to the intensity in the wavelength range from 150 to 400 nanometers is at least about 10%.

3.      A method of transmitting light of which the ratio of the intensity in the wavelength range from 150 to 200 nanometers to the intensity in the wavelength range from 150 to 250 nanometers is at least 10%, which comprises directing said light onto one end of an optical fiber and receiving the light transmitted through said fiber on emission thereof from another part of said fiber, wherein said fiber comprises a core consisting substantially only of synthetic fused silica and a cladding consisting substantially only of fluorine-doped synthetic fused silica.

4.      The method of claim 1, 2 or 3 wherein said ratio is at least 50%.

5.    The method of claim 1, 2 or 3 wherein said ratio is at least 90%.

6.    The method of claim 1 or 3 wherein said fiber has a transmission of at least 5% for a 1 meter length at each wavelength in the wavelength range from 190 to 300 nanometers.

7.    The method of claim 1 or 3 wherein the source of said light comprises an arc.

8.    The method of claim 1 or 3 wherein the source of said light comprises a spark.

9.    The method of claim 1 or 3 wherein the source of said light comprises a plasma.

10.    The method of claim 1 or 3 wherein the source of said light comprises a laser.

11.    The method of claim 1 or 3 wherein said transmitted light impinges on means responsive to light at at least one wavelength less than 300 nanometers.

12.    The method of claim 11 wherein said transmitted light impinges on means responsive to light at at least one wavelength less than 280 nanometers.

13.    The method of claim 12 wherein said transmitted light impinges on means responsive to light at at least one wavelength less than 200 nanometers.

14.    The method of claim 11 wherein said light-responsive means comprises a luminescent material.

15.    The method of claim 11 wherein said light-responsive means determines whether the intensity of the transmitted light at at least one wavelength less than 300 nanometers exceeds a predetermined level.

16.    The method of claim 11 wherein said light responsive means determines the quantitative intensity of the transmitted light at at least one wavelength less than 300 nanometers.

17.    The method of Claim 11 wherein said light-responsive means is responsive subtantially only to light having a wavelength less than 280 nanometers.

18.    The method of Claim 11 wherein said light-responsive means comprises an optical filter which transmits substantially only light having a wavelength less than 280 nanometers.

19.    Apparatus comprising:

(a) an optical fiber, which fiber comprises a core consisting substantially only of synthetic fused silica and a cladding consisting substantially only of fluorine-doped synthetic fused silica; and

(b) light-responsive means adjacent a part of the fiber from which light transmitted thereby in use can be emitted from said fiber, the light-responsive means being responsive to light at at least one wavelength less than 300 nanometers and being arranged to receive such light when emitted from the fiber.

20.    The apparatus of Claim 19 wherein said light-responsive means is responsive to light at at least one wavelength less than 250 nanometers.

21.    The apparatus of Claim 20 wherein said light-responsive means is responsive to light at at least one wavelength less than 200 nanometers.

22.    The apparatus of Claim 19 wherein said light-responsive means is responsive substantially only to light having a wavelength less than 280 nanometers.

23.    The apparatus of Claim 22 wherein said light-responsive means comprises an optical filter which transmits substantially only light having a wavelength less than 280 nanometers.

24.    The apparatus of Claim 19 wherein said fiber has a transmission of at least 5% for a 1 meter length at each wavelengh in the wavelength range from 190 to 280 nanometers.

25.    The apparatus of Claim 19 wherein said light-responsive means comprises a luminescent material.

26.    The apparatus of Claim 19 wherein said light-responsive means can determine whether the intensity of light passing through said fiber to impinge upon it at at least one wavelength less than 280 nanometers exceeds a predetermined level.

27.    The apparatus of Claim 19 wherein said light-responsive means can determine the quantitative intensity of light passing through said fiber to impinge upon it at at least one wavelength less than 280 nanometers.

28.    The apparatus of Claim 19 which further comprises:

(c)    a source of light which emits at at least one wavelength less than 280 nanometers.

29.    The apparatus of Claim 28 wherein said light source comprises means for generating an electrical arc.

30.    The apparatus of Claim 28 wherein said light source comprises means for generating a spark.

31.    The apparatus of Claim 28 wherein said light source comprises means for generating a plasma.

32.    The apparatus of Claim 28 wherein said light source comprises a laser.

33.    Apparatus according to any of claims 19 to 32 for indicating the occurrence of an event producing light at at least one wavelength less than 280 nanometers, wherein one end of the said optical fiber is positioned such that at least a portion of the light produced by said event will impinge on it, the said light-responsive means is responsive substantially only to light having a wavelength less than 280 nanometers and determines whether the intensity of said light at at least one wavelength less than 280 nanometers exceeds a predetermined level and the said light responsive means is, or is connected to, indicator means which emits an indicator signal when said light-responsive means determines that said light intensity exceeds said predetermined level.

34.     Apparatus according to any of claims 19 to 32 for remotely measuring temperature, wherein a layer of luminescent material is provided at one end of said optical fiber in optical communication therewith, said luminescent material being characterized by having a substantial response to excitation by light having a wavelength less than 300 nanometers, and by emitting, when excited, light that varies as a function of the temperature of the luminescent material; and means is provided at the other end of said optical fiber for transmitting light, of which the ratio of the intensity in the wavelength range of 150 to 300 nanometers to the intensity in the wavelength range of 150 to 400 nanometers is at least 10%, through said fiber and onto said luminescent material to cause it to emit light; and further means is possible near said other end of said optical fiber for responding to light emitted by said luminescent material to produce a signal indicative of the temperature of the luminescent material.

35.     An apparatus according to any of claims 19 to 32 for the spectroscopic determination of a chemical species having a major emission spectral line at a wave-length less than 200 nanometers, wherein one end of the said optical fibre is positioned near means for exciting a sample to be tested for the presence of said chemical species such that it would emit said spectral line so that at least a portion of the light emitted by said species will impinge on the fiber end and the said

0094236

light responsive means is, or is connected to, means for analysing tehe transmitted light or indicating the presence of a predetermined wavelength therein.

36. A method according to any of claims 1 to 18 wherein the transmitted light is directed onto and/or withdrawn from an end of the fiber.

37. Apparatus according to any of claims 19 to 35 wherein the light responsive means is arranged to receive light emitted from an end of the fiber.

0094236

European Patent Office

**EUROPEAN SEARCH REPORT**

Application number

EP 83 30 2606

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | US-A-4 165 915  (K. RAU et al.)<br>* Column 1, line 58 - column 2, line 13; figure 1 * | 1,3,19 | G 02 B    5/14<br>C 03 C   13/04 |
| A,D | US-A-4 215 275  (K.A. WICKERSHEIM)<br><br>* Column 11, lines 26-59; figure 1 * | 11-14, 18-23, 25,34 | |
| A | F. GRUM et al.: "Optical radiation measurements", vol. 1, Radiometry, 1979, pages 138-143, Academic Press, New York, USA<br>*   Chapter  5.4.4   "Discharge sources";  table  5.6  "Important laser wavelengths" | 7-9,32 | |
| | | | **TECHNICAL FIELDS SEARCHED (Int. Cl. ³)** |
| A | US-A-3 966 300  (G. BERNSEE)<br><br>----- | | G 02 B<br>C 03 C |

The present search report has been drawn up for all claims

| Place of search | Date of completion of the search | Examiner |
|---|---|---|
| THE HAGUE | 03-08-1983 | MORRELL D.M. |